# FASCICULE DE BREVET EUROPEEN

(11) **EP 2 788 150 B1**
(45) Date de publication et mention de la délivrance du brevet: **18.05.2016**
(21) Numéro de dépôt: 12797918.5
(22) Date de dépôt: 06.12.2012
(51) Int. Cl.: B25J 9/16

(54) **PROCÉDÉ DE COMMANDE D'UN SYSTÈME ROBOTISÉ POUR LE REVÊTEMENT D'UNE PIÈCE PAR PROJECTION D'UN MATÉRIAU**
VERFAHREN ZUM STEUERN EINER AUTOMATISIERTEN ANLAGE ZUM BESCHICHTEN EINES BAUTEILS DURCH VERSPRÜHEN EINES MATERIALS
METHOD FOR CONTROLLING AN AUTOMATED SYSTEM FOR COATING A COMPONENT BY SPRAYING A MATERIAL

(30) Priorité: 06.12.2011 FR 1161252
(43) Date de publication de la demande: 15.10.2014
(73) Titulaire: Messier-Bugatti-Dowty, 78140 Vélizy-Villacoublay (FR)
(72) Inventeur: CHEBROUX, Christophe, F-78140 Velizy Villacoublay (FR); GENDRON, Jean-Yves, F-78140 Velizy Villacoublay (FR); MONERIE-MOULIN, Francis, F-78140 Velizy Villacoublay (FR)
(74) Mandataire: Parzy, Benjamin Alain
(86) Numéro de dépôt international: PCT/EP2012/074713
(87) Numéro de publication internationale: WO 2013/083733

(56) Documents cités:
- DE-A1- 3 526 958
- US-A1- 2005 051 198

## Description

### ARRIERE PLAN DE L'INVENTION

L'invention concerne le domaine du revêtement de pièce à l'aide d'un matériau projeté via un système robotisé.

En particulier l'invention concerne un procédé de commande d'un système robotisé mobile par rapport à une pièce pour appliquer un revêtement sur cette pièce. Ce système robotisé comporte un bras articulé entre des première et seconde extrémités du bras robotisé et une tête de projection dotée d'une buse projection du matériau de revêtement et d'une conduite souple alimentant la buse en matériau à projeter. La tête de projection est portée par la première extrémité du bras articulé et la seconde extrémité du bras est reliée à un support du système robotisé. Le procédé comportant la génération d'une commande du bras pour déplacer la tête par rapport à la pièce.

Habituellement, pour réaliser le revêtement, on fait tourner la pièce devant le système robotisé tout en projetant le matériau avec la tête de projection. Toutefois ce mode de projection a des limites en particulier lorsque la pièce à revêtir est de grande taille, lourde, ou a une géométrie la rendant difficile à orienter par rapport au système robotisé. En particulier lorsqu'on veut revêtir les extrémités d'une pièce en forme de T, telle qu'une pièce/ tige d'atterrisseur d'avion, on doit parfois utiliser des bras robotisés de grandes dimensions capables de s'allonger suffisamment pour permettre la rotation complète de la pièce en T sans buter sur le bras. De tels robots sont couteux. Le document US-A1-2005/051198 décrit un tel état de la technique.

### OBJET DE L'INVENTION

Un objet de l'invention est de trouver une solution alternative pour projeter un matériau sur une pièce et générer un revêtement tout autour d'un axe passant par cette pièce.

### RESUME DE L'INVENTION

Pour cela, il est proposé un procédé de commande d'un système robotisé mobile par rapport à une pièce pour appliquer un revêtement sur cette pièce. Ce système robotisé comporte :
- un bras robotisé qui est articulé entre des première et seconde extrémités du bras ;
- une tête de projection dotée d'une buse de projection du matériau de revêtement ; et
- une conduite souple alimentant la buse en matériau de revêtement à projeter.

Cette tête de projection est portée par la première extrémité du bras et la seconde extrémité du bras étant reliée à un support du système robotisé immobilisé par rapport à la pièce.

Le procédé selon l'invention comporte la génération d'une commande du bras robotisé telle :
- que la tête de projection est déplacée par le bras selon une trajectoire s'étendant tout autour d'un axe de pièce passant par la pièce ; et
- que, qu'elle que soit la position de la tête le long de cette trajectoire, la buse possède un axe de projection toujours orienté en direction de la pièce pour y projeter ledit matériau ; et
- que sur une première portion de la trajectoire, un premier côté de la tête est orienté en direction d'un plan de pièce passant par une zone de maintien de la pièce, ce plan étant perpendiculaire à l'axe de pièce ; et
- que sur une deuxième portion de la trajectoire distincte de la première portion, un second côté de la tête opposé par rapport au premier côté de la tête est orienté en direction dudit plan de pièce.

Pour la compréhension de l'invention, chaque côté de la tête est fixe par rapport à la tête et sert de repère pour illustrer l'orientation de la tête par rapport au plan P lors du déplacement de la tête le long de la trajectoire.

Un côté de la tête n'est donc pas forcément plan comme sur les figures décrites ci-après et peut avoir de multiples formes.

Pour la compréhension de l'invention, on considère qu'un côté est orienté en direction du plan de pièce, si parmi les deux côtés opposés de la tête, ce côté est le plus proche du plan P. Le côté non orienté vers le plan est par conséquent celui des deux côtés de la tête qui est le plus éloigné du plan P. Ainsi, selon cette définition de l'orientation d'un côté de tête en direction du plan, quelle que soit la position de la tête par rapport au plan si un des côtés est orienté vers le plan alors, l'autre de ces côtés est forcément non orienté vers le plan. Il existe des positions de la tête pour lesquelles aucun des deux côtés n'est orienté vers le plan, c'est le cas lorsque ces côtés opposés sont orientés selon une droite parallèle au plan P. Selon le procédé de l'invention, lorsque la tête fait un tour complet autour de l'axe de pièce et le long de la trajectoire, la tête est soit positionnée sur la première portion de la trajectoire avec le premier côté de la tête exclusivement orienté en direction du plan de pièce soit positionnée sur la deuxième portion de la trajectoire avec le second côté de la tête exclusivement orienté en direction dudit plan de pièce, soit en transition entre les première et deuxième portions de trajectoire, les premier et second côtés de la tête étant alors orientés perpendiculairement au plan de pièce.

Grâce à ce procédé de commande, on peut créer une couche annulaire de revêtement sur une pièce tout en limitant la rotation relative des portions contiguës du bras qui sont articulées entre elles. Cette couche de revêtement s'étend le long et autour de l'axe de pièce et est soit formée autour de la pièce, soit formée à l'intérieur d'un évidement de la pièce dans lequel passe l'axe de pièce.

Avec le procédé de commande selon l'invention, la buse peut réaliser plusieurs révolutions autour de l'axe de pièce sans que l'on doive pivoter les portions du bras contiguës et articulées entre elles de plus de 360° les unes par rapport aux autres.

La tête portant la buse peut ainsi être alimentée en matériau à projeter par l'intermédiaire d'une simple conduite souple pouvant s'étendre le long du bras ou s'étendre d'un point d'attache situé au dessus du bras ou de la pièce vers la tête.

Dès lors, on limite le besoin d'utiliser un raccord tournant entre des portions de conduite ce qui est avantageux d'un point de vu maintenance.

De plus lorsque la conduite est d'une seule et même pièce continue, sans raccord on constate que l'écoulement du matériau dans la conduite est amélioré.

On note aussi qu'il est possible de positionner un raccord tournant sur la conduite, et dans ce cas, grâce au procédé de commande de l'invention, ce raccord est peu sollicité en torsion et présente ainsi une durée de vie accrue.

### BREVE DESCRIPTION DES DESSINS

La figure 1 illustre un système robotisé doté d'un bras robotisé, ce système étant adapté à mettre en oeuvre le procédé de commande de l'invention ;
Les figures 2a, 2b, 2c, 2d, illustrent la trajectoire suivie par la tête lorsque déplacée conformément à la commande du bras selon l'invention, la tête faisant un tour complet de l'axe de pièce ;

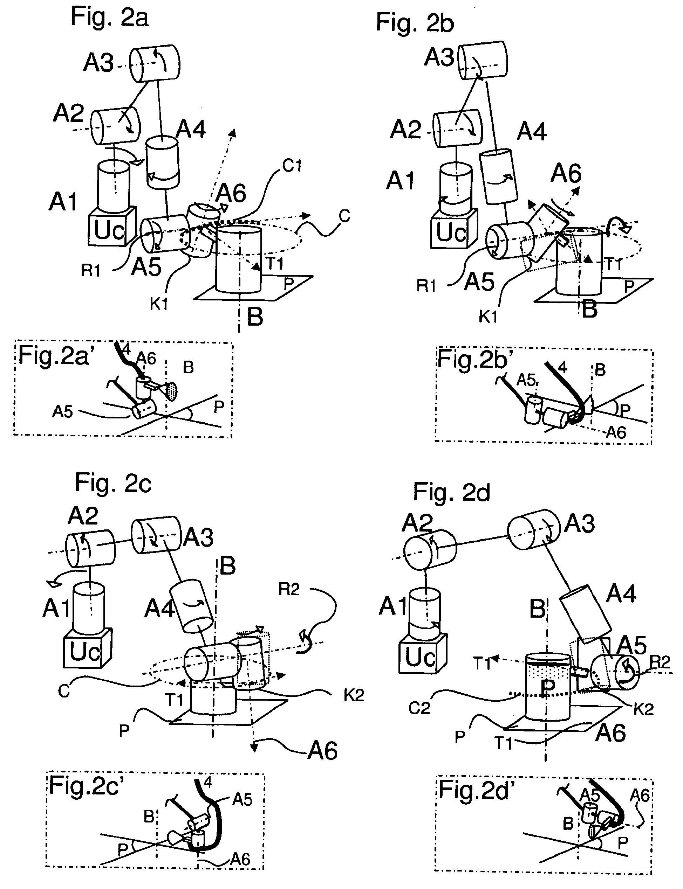

Les figures 2a', 2b', 2c', 2d' illustrent de manière schématique les positions respectivement adoptées par la tête aux figures respectives 2a, 2b, 2c, 2d.

### DESCRIPTION DETAILLEE DE L'INVENTION

L'invention porte sur un procédé de commande d'un système robotisé S comportant la génération d'une commande d'un bras 1 du système S. En réponse à cette commande le système robotisé déplace une tête de projection T d'un matériau selon une trajectoire C s'étendant tout autour d'un axe B de cette pièce. Tout au long de cette trajectoire C la tête est orientée de manière que sa buse 3 ait un axe de projection T1 orienté vers la pièce afin d'y déposer une couche de revêtement annulaire. La couche de revêtement est ainsi formée sur la pièce Pi tout autour de l'axe de la pièce B, cette couche s'étendant le long de cet axe.

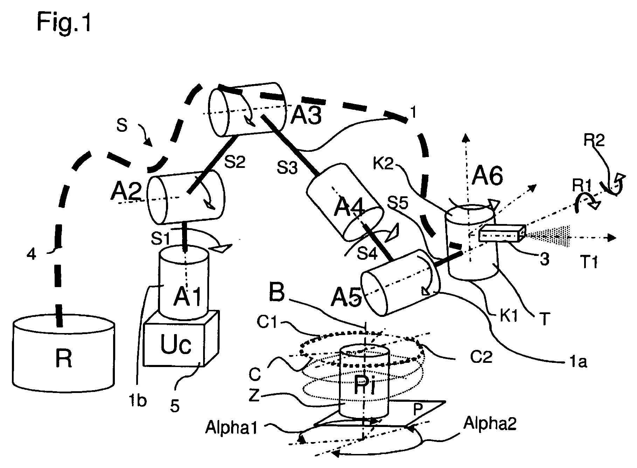

Comme on le voit sur les figures 1, 2a, 2b, 2c, 2d, le système robotisé S comporte un bras robotisé 1 articulé entre des première et seconde extrémités 1a, 1b du bras 1. Ce bras articulé 1 porte au niveau de sa première extrémité 1a, la tête de projection T dotée d'une buse projection 3 du matériau de revêtement. La tête est alimentée en matériau à projeter sur la pièce Pi via une conduite souple 4 s'étendant le long du bras.

Le bras est relié au niveau de sa seconde extrémité 1b à un support du système robotisé 5 qui est luimême immobilisé par rapport à la pièce Pi. Typiquement le support 5 est relié mécaniquement à un moyen de préhension de la pièce qui est indexé en position de manière à immobiliser la pièce Pi par rapport au support 5.

Le système robotisé S comporte en outre une réserve de matériau à projeter R et des moyens de génération d'un flux de fluide à l'intérieur de la conduite souple 4 pour transporter via la conduite du matériau de la réserve R vers la buse de projection 3 de la tête de projection.

Le matériau à projeter est une poudre/matériau pulvérulant et le flux de fluide comporte l'ensemble des fluides nécessaires à la projection de la poudre sur la pièce. Le fluide peut éventuellement contenir un carburant. Le matériau pulvérulent projeté par le fluide propulseur fond ou ramolli lors de la projection et est impacté sur la pièce Pi pour y former la couche de revêtement. La buse peut aussi être une buse de projection plasma, de projection arc fil ou Cold Spray (cold spray est le terme anglophone pour projection dynamique par gaz froid).

Comme on le voit en détail sur la figure 1, le bras articulé 1 comporte des première, deuxième, troisième, quatrième et cinquième portions articulées entre elles S1, S2, S3, S4, S5.

La première portion S1 du bras 1 est reliée au support 5 du système robotisé S via une première liaison pivot A1 d'axe de pivot parallèle audit axe de pièce B.

La deuxième portion S2 du bras 1 est reliée à la première portion du bras S1 via une deuxième liaison pivot A2 d'axe de pivot perpendiculaire à l'axe de pivot de la première liaison pivot A1.

La troisième portion S3 du bras 1 est reliée à la deuxième portion S2 via une troisième liaison pivot A3 d'axe de pivot parallèle à l'axe de pivot de la deuxième liaison pivot A2.

La quatrième portion S4 du bras 1 est reliée à la troisième portion S3 via une quatrième liaison pivot A4 d'axe de pivot perpendiculaire à l'axe de pivot de la troisième liaison pivot A3.

La cinquième portion S5 du bras 1 est reliée d'une part à la quatrième portion S4 via une cinquième liaison pivot A5 d'axe de pivot perpendiculaire à l'axe de pivot de la quatrième liaison pivot A4 et d'autre part à la tête de projection T via une sixième liaison pivot A6 d'axe de pivot perpendiculaire à l'axe de pivot de la cinquième liaison pivot A5.

Ainsi le bras robotisé est un bras à cinq axes au bout duquel est placé un sixième axe de liaison pivot A6 pour orientation la tête T par rapport à la cinquième portion articulée S5 du bras.

Chacune de ces liaisons pivot A1, A2, A3, A4, A5, A6 comporte une motorisation propre reliée à une unité de commande Uc générant la commande du bras articulé et d'orientation de la tête T par rapport au bras 1. Ainsi chacune de ces liaisons pivot motorisées est actionnée en réponse à la commande et génère des mouvements d'orientation des portions du bras S1, S2, S3, S4, S5 les unes par rapport aux autres, ainsi qu'un mouvement d'orientation de la tête par rapport à la portion S5.

La conduite souple 4 est attachée au bras articulé via des moyens de fixation au moins au niveau de la première extrémité la du bras et en particulier au niveau de la liaison pivot A5. Cette conduite peut ainsi suivre plus facilement les mouvements du bras et alimenter, en continu, la tête en matériau tout au long de son déplacement autour de l'axe B. Dans un autre mode de réalisation, la conduite 4 dont une extrémité est liée à la tête de projection peut être suspendue à une fixation / point d'attache au dessus du robot comme c'est le cas sur les figures 2a', 2b', 2c', 2d'. Dans ce mode, la conduite est uniquement liée à la tête sans être liée au bras du robot.

La tête de projection comporte deux côtés distincts respectivement nommés premier et second côtés K1 et K2. Ces côtés K1, K2 sont opposés l'un par rapport à l'autre, c'est-à-dire qu'ils sont chacun orientés vers l'extérieur de la tête de projection T et dans des sens diamétralement opposés. En d'autres termes, ces côtés K1 et K2 sont placés de part et d'autre de la tête de projection. Sur les figures 2a, 2a', 2b, 2b', le côté K1 est le côté orienté vers le plan P alors que l'autre côté K2 n'est pas orienté vers le plan P. Inversement, sur les figures 2c, 2c', 2d, 2d', le côté K2 est orienté vers le plan P alors que le côté K1 n'est pas orienté vers le plan P.

Comme on le verra par la suite, la pièce Pi s'étend selon un axe B autour duquel on veut réaliser le revêtement annulaire. Cet axe B de la pièce Pi et un plan P de pièce Pi sont utilisés comme repères virtuels pour positionner la trajectoire C de la tête T par rapport à la pièce Pi et pour orienter cette tête par rapport au plan P lors de son déplacement selon la trajectoire C. Cet axe B est un axe virtuel s'étendant au travers de la pièce Pi et perpendiculaire au plan virtuel P. La pièce est positionnée par rapport au bras à l'aide d'un support de pièce Pi non représenté sur les figures. Ce support de pièce est généralement un montage d'usinage ou un mandrin. Ce support est en prise avec la pièce Pi dans une zone de support de la pièce où s'étend le plan P pour maintenir la pièce au moins pendant la projection du matériau.

La commande du bras, défini la trajectoire C de la tête tout autour de l'axe B et son orientation par rapport au plan P. Cette trajectoire C peut être annulaire ou en forme de spirale comme représenté en pointillé sur la figure 1.

Préférentiellement la trajectoire C comprend plusieurs tours autour de l'axe B, ce qui permet de réaliser plusieurs passes de projection au même endroit de la pièce pour ajuster l'épaisseur du revêtement déposé. Les passes peuvent aussi se chevaucher partiellement pour réaliser un revêtement cylindrique de longueur supérieure à une largeur maximale de projection autorisée par la buse.

La commande est telle que la trajectoire C fait au moins un tour complet de l'axe B avec une orientation de tête qui est telle que sur ce dit au moins un tour complet, la sortie de buse 3 est toujours orientée en direction de la pièce Pi pour y projeter le matériau.

La commande selon l'invention est telle que, quel que soit le nombre de tours de tête T autour de l'axe B, à chaque tour complet de tête autour de l'axe B, la tête T pivote toujours de moins de 360° par rapport au plan P et l'orientation de la tête par rapport au plan P est la même au début du tour et à la fin du tour.

Ainsi, le procédé de commande permet de projeter le matériau :
- soit à l'extérieur d'une pièce en orientant la sortie de buse vers l'axe B ;
- soit à l'intérieur d'une zone creuse d'une pièce Pi, par exemple dans un alésage d'axe B, et dans ce cas on oriente la sortie de buse 3 vers l'extérieur de la pièce.

La trajectoire C, qu'elle soit annulaire ou en spirale, et qu'elle soit à l'extérieur ou à l'intérieur de la pièce, comprend toujours au moins une première portion de trajectoire C1 placée dans un premier secteur angulaire Alpha1 autour de l'axe B et au moins une deuxième portion de trajectoire C2 placée dans le deuxième secteur angulaire Alpha2 distinct du premier secteur. Ces deux secteurs Alpha1 et Alpha2 couvrent à eux deux au moins 80% du secteur angulaire total s'étendant tout autour de l'axe B. Lorsque vus selon la direction de l'axe B, ces secteurs Alpha1 et Alpha2 sont complètement séparés l'un de l'autre et ne se recouvrent pas. On note que la trajectoire annulaire est une trajectoire qui s'étend dans un seul plan et sur plusieurs tours autour de l'axe B. Cette trajectoire permet de former un revêtement annulaire de faible hauteur sur la pièce. On note aussi que la trajectoire en spirale est une trajectoire qui s'étend sur plusieurs tours autour de l'axe B, et d'un tour à l'autre, la tête est translatée le long de l'axe B d'un pas fixe ou variable entre des valeurs de pas prédéterminées. Cette trajectoire en spirale permet de former un revêtement annulaire ayant une hauteur supérieure à la largeur de projection maximale autorisée par la buse.

Comme la trajectoire C fait plusieurs fois le tour de l'axe B, elle comporte :
- plusieurs portions de trajectoire (dont la portion C1) distinctes les unes des autres et exclusivement disposées dans le premier secteur angulaire Alpha1 ; et
- plusieurs autres portions de trajectoire (dont la portion C2) distinctes les unes des autres et exclusivement disposées dans le deuxième secteur angulaire Alpha2.

Comme on le voit sur les figures 2a et 2b, la commande est telle que pour toutes les portions de la trajectoire C se trouvant dans le premier secteur Alpha1, la tête T a son premier côté K1 toujours orienté en direction dudit plan de pièce P. Le second côté K2 est alors orienté à l'inverse du plan P.

Comme on le voit sur les figures 2c et 2d, la commande est telle que pour toutes les portions de la trajectoire C s'étendant dans le deuxième secteur Alpha2, la tête a toujours son second côté K2 orienté en direction dudit plan de pièce P. Le premier côté K1 est alors orienté à l'inverse du plan P.

A chaque passage de la tête d'une portion de trajectoire C1 située dans le premier secteur angulaire Alpha1 vers une portion de trajectoire C2 située dans le second secteur angulaire Alpha2, la tête est pivotée selon un premier sens de rotation R1 par rapport à la première extrémité 1a du bras articulé. Ce pivotement R1 permet d'orienter la tête par rapport au plan P pour que l'on passe d'une orientation de tête où le premier côté K1 de la tête est orienté vers le plan P à une orientation de tête où le second côté K2 de la tête est orienté vers le plan P.

De même, à chaque passage de la tête T d'une portion de la trajectoire C2 située dans le deuxième secteur angulaire Alpha2 vers une portion de trajectoire C1 située dans le premier secteur angulaire Alpha1, la tête T est alors pivotée selon un second sens de rotation R2 par rapport à la première extrémité 1a du bras articulé. Ce second sens de rotation R2 de la tête T est contraire audit premier sens de rotation R1. Ce pivotement R2 permet d'orienter la tête par rapport au plan P pour que l'on passe d'une orientation de tête où le premier côté K1 de la tête est orienté vers le plan P à une orientation de tête où le second côté K2 de la tête vers le plan P.

Le pivotement permettant les rotations R1 et R2 se fait principalement autour de la liaison pivot A5 qui constitue la première extrémité du bras 1a.

En résumé, grâce à la commande selon le procédé de l'invention, quelle que soit la position de la tête T le long de sa trajectoire C la buse 3 est toujours orientée vers la pièce. Et durant la projection :
- lorsque la tête se trouve placée dans le premier secteur angulaire Alpha1, alors le premier côté K1 de la tête est orienté vers le plan P de la pièce Pi ; et
- lorsque la tête se trouve placée dans le deuxième secteur angulaire Alpha2, alors le second côté K1 de la tête est orienté vers le plan P de la pièce Pi.

Le passage de la tête le long de sa trajectoire C du premier secteur angulaire Alpha1 vers le deuxième secteur angulaire Alpha2 est accompagné d'une première rotation R1 de la tête par rapport à la première extrémité la du bras qui porte la tête. Cette première rotation R1 est toujours inférieure à 360° de rotation.

Comme on le voit sur les figures 2c et 2d, le passage de la tête le long de sa trajectoire C du deuxième secteur angulaire Alpha2 vers le premier secteur angulaire Alpha1 est accompagné d'une rotation selon un second sens de rotation R2 de la tête par rapport à la première extrémité 1a du bras qui porte la tête. Ce second sens de rotation R2 est inverse du premier sens de rotation R1 et est toujours inférieure à 360° de rotation de rotation.

Le fait que ces rotations R1, R2 soient inverses et d'amplitudes angulaires respectivement inférieures à 360° évite un enroulement de la conduite autour du bras facilitant ainsi l'approvisionnement de la buse en matériau à projeter.

Grâce au procédé de l'invention, au cours d'une rotation complète de la tête autour de l'axe B, la torsion de la conduite est de moins de 180° dans un sens autour du bras, puis de moins de 180° dans un sens contraire autour de ce même bras. Le procédé de commande selon l'invention permet ainsi d'éviter le risque de blocage lors de l'enroulement de la conduite autour du bras. En particulier, sur les figures 2a', 2b', 2c', 2d', la conduite est représentée pour illustrer sa position par rapport à la tête lorsque cette tête fait un tour complet de l'axe B. On voit que la conduite ne s'enroule pas autour du bras et cela quel que soit le nombre de tour de tête autour de l'axe de pièce B. On voit aussi sur ces figures que la tête T qui est montée à rotation par rapport à l'axe A5 n'est pas forcément alignée avec l'axe A5, comme sur les figures 2a, 2b, 2c, 2d mais peut être décalée de l'axe A5 comme on le voit sur les figures 2a', 2b', 2c', 2d'. On note que sur ces figures 2a', 2b', 2c', 2d' les axes A4 et A6 sont coplanaires et passent par un plan perpendiculaire à l'axe A5.

Le procédé de commande selon l'invention permet en outre d'éviter les points singuliers (c'est à dire des moments où des axes du bras sont alignés l'un par rapport à l'autre induisant ainsi un doute au niveau de l'unité de commande Uc).

Dans un mode de réalisation préférentiel de l'invention, on fait en sorte que la commande soit telle que tout au long du déplacement de la tête le long de sa trajectoire C, la vitesse de déplacement du point d'intersection entre l'axe de sortie T1 de buse 3 avec la pièce soit comprise entre des vitesses maximale et minimale prédéterminées, la vitesse maximale prédéterminée étant au plus égale à 150% de la vitesse minimale prédéterminée, préférentiellement au plus égale à 120%.

On fixe ici un paramètre influant de la qualité de la projection qui est la vitesse de déplacement du point d'impact du matériau projeté par rapport à la pièce Pi et on homogénéise ainsi le revêtement formé.

Dans un mode de réalisation de l'invention éventuellement complémentaire du précédent, on fait en sorte que la commande du bras articulé 1 soit telle que la distance, mesurée selon l'axe de projection de la tête T1 de buse, entre une sortie de la buse 3 par laquelle passe cet axe de projection T1 et la pièce Pi soit comprise tout au long de la trajectoire C, entre des distances minimale et maximale prédéterminées. La distance maximale est choisie pour être au plus égale à 120% de la distance minimale prédéterminée.

En limitant l'écart entre les distances minimale et maximale prédéterminées, on s'assure que tout au long de la trajectoire de déplacement, la sortie de buse est toujours placée une distance sensiblement constante de la pièce (cette distance est la distance, mesurée selon l'axe de projection T1, s'étendant entre la sortie de la buse et la pièce). Ceci permet d'homogénéiser tout au long de la trajectoire C un autre paramètre important de la projection.

L'invention porte aussi sur un procédé de fabrication d'une tige d'atterrisseur comportant des étapes de revêtement d'extrémités d'une tige d'atterrisseur et dans lequel on met en oeuvre le procédé de commande de système robotisé S selon l'un quelconque des modes décrits précédemment. Dans ce cas la pièce du procédé de commande est constituée par la tige d'atterrisseur. Le revêtement projeté via la buse 3 du système robotisé S est un carbure ou un chrome localisé sur des portées de roulements de la tige ou sur des zones de la tige destinées à supporter le frottement de joints. Préférentiellement la tige est en T et les zones de tige revêtues s'étendent le long des extrémités symétriques du T. Ce procédé est avantageux car il permet de revêtir une pièce encombrante telle qu'une tige en T sans avoir à la faire tourner.

## Revendications

1. Procédé de commande d'un système robotisé (S) mobile par rapport à une pièce (Pi) pour appliquer un revêtement sur cette pièce (Pi), ce système robotisé (S) comportant un bras robotisé (1) articulé entre des première et seconde extrémités (1a, 1b) du bras et une tête de projection (T) dotée d'une buse de projection (3) du matériau de revêtement et d'une conduite souple (4) alimentant la buse (3) en matériau de revêtement à projeter, cette tête de projection (T) étant portée par la première extrémité (1a) du bras (1) et la seconde extrémité (1b) du bras étant reliée à un support du système robotisé (5) immobilisé par rapport à la pièce (Pi), le procédé comportant la génération d'une commande du bras telle :
- que la tête de projection (T) soit déplacée par le bras (1) selon une trajectoire (C) s'étendant tout autour d'un axe (B) de pièce passant par la pièce (Pi) ; et
- que, qu'elle que soit la position de la tête (T) le long de cette trajectoire (C), la buse (3) ait un axe de projection (T1) toujours orienté en direction de la pièce (Pi) pour y projeter ledit matériau (6) ; et **caractérisé en ce que** la commande du bras est telle
- que sur une première portion (C1) de la trajectoire (C), un premier côté (K1) de la tête soit orienté en direction d'un plan de pièce (P) passant par une zone (Z) de maintien de la pièce(Pi), ce plan (P) étant perpendiculaire à l'axe de pièce (B) ; et
- que sur une deuxième portion (C2) de la trajectoire (C) distincte de la première portion (C1), un second côté (K2) de la tête (T) opposé par rapport au premier côté (K1) de la tête (T) soit orienté en direction dudit plan (P) de pièce (Pi).

2. Procédé selon la revendication 1, dans lequel lorsque la première portion de trajectoire (C1) s'étend dans un premier secteur angulaire autour de l'axe de pièce (B) et la deuxième portion de trajectoire (C2) s'étend dans un deuxième secteur angulaire autour de l'axe de pièce (B), ces premier et deuxième secteurs angulaires étant distincts l'un de l'autre, la trajectoire de la tête autour de l'axe de pièce (B) comportant :
- plusieurs portions de la trajectoire distinctes les unes des autres exclusivement disposées dans le premier secteur angulaire ; et
- plusieurs autres portions de la trajectoire distinctes les unes des autres exclusivement disposées dans le deuxième secteur angulaire ;
- pour toutes les portions de la trajectoire (C) s'étendant dans le premier secteur (Alpha1), la tête a son premier côté (K1) orienté en direction dudit plan de pièce (P) ; et
- pour toutes les portions de la trajectoire (C) s'étendant dans le deuxième secteur (Alpha2), la tête a son second côté (K2) orienté en direction dudit plan de pièce (P) ; et
- à chaque passage de la tête d'une portion de trajectoire (C1) située dans le premier secteur angulaire (Alpha1) vers une portion de trajectoire (C2) située dans le second secteur angulaire (Alpha2), la tête est pivotée selon un premier sens de rotation (R1) par rapport à la première extrémité (1a) du bras articulé ;
- à chaque passage de la tête d'une portion de la trajectoire (C2) située dans le deuxième secteur angulaire (Alpha2) vers une portion de trajectoire (C1) située dans le premier secteur angulaire (Alphal), la tête est alors pivotée selon un second sens de rotation (R2) par rapport à la première extrémité (1a) du bras articulé, ce second sens de rotation de la tête étant contraire audit premier sens de rotation.

3. Procédé selon l'une quelconque des revendications 1 à 2, dans lequel la trajectoire de déplacement de la tête de projection par le bras articulé est une trajectoire circulaire s'étendant autour de l'axe de pièce (B) ou une trajectoire en forme de spirale s'étendant autour dudit axe de pièce (B).

4. Procédé selon l'une quelconque des revendications 1 à 3, dans lequel la conduite souple s'étend le long du bras articulé et est attachée à ce dernier via des moyens de fixation.

5. Procédé selon l'une au moins des revendications 1 à 4, dans lequel la commande du bras articulé est telle que la distance, mesurée selon l'axe de projection de la tête (T1) de buse, entre une sortie de la buse par laquelle passe cet axe de projection (T1) et la pièce (Pi) est comprise tout au long de la trajectoire de déplacement (C) de la tête de projection autour de l'axe B, entre des distances minimale et maximale prédéterminées, la distances maximale étant au plus égale à 120% de la distance minimale prédéterminée.

6. Procédé selon l'une au moins des revendications précédentes dans lequel le système robotisé (S) comporte en outre une réserve de matériau à projeter (R) et des moyens de génération d'un flux de fluide à l'intérieur de la conduite souple (4) pour transporter via cette conduite du matériau de la réserve (R) vers la buse de projection (3) de la tête de projection, le matériau à projeter étant une poudre et le flux de fluide comportant préférentiellement au moins un carburant.

7. Procédé selon l'une au moins des revendications précédentes, dans lequel le bras articulé comporte des première, deuxième, troisième, quatrième et cinquième portions articulées (S1, S2, S3, S4, S5) :
- la première portion (S1) du bras (1) étant reliée au support (5) du système robotisé (S) via une première liaison pivot (A1) d'axe de pivot parallèle audit axe de pièce (B) ;
- la deuxième portion (S2) du bras (1) étant reliée à la première portion du bras (S1) via une deuxième liaison pivot (A2) d'axe de pivot perpendiculaire à l'axe de pivot de la première liaison pivot (A1) ;
- la troisième portion (S3) du bras (1) étant reliée à la deuxième portion (S2) via une troisième liaison pivot (A3) d'axe de pivot parallèle à l'axe de pivot de la deuxième liaison pivot (A2) ;
- la quatrième portion (S4) du bras (1) étant reliée à la troisième portion (S3) via une quatrième liaison pivot (A4) d'axe de pivot perpendiculaire à l'axe de pivot de la troisième liaison pivot (A3) ;
- la cinquième portion (S5) du bras (1) étant reliée d'une part à la quatrième portion (S4) via une cinquième liaison pivot (A5) d'axe de pivot perpendiculaire à l'axe de pivot de la quatrième liaison pivot (A4) et d'autre part à la tête de projection (T) via une sixième liaison pivot (A6) d'axe de pivot perpendiculaire à l'axe de pivot de la cinquième liaison pivot (A5), chacune desdites liaisons pivot (A1, A2, A3, A4, A5, A6) étant respectivement motorisées et actionnées en mouvement en fonction de ladite commande du bras (1).

8. Système robotisé **caractérisé en ce qu'**il est adapté à mettre en oeuvre le procédé de commande de bras selon l'une quelconque des revendications 1 à 7.

## Patentansprüche

1. Verfahren zur Steuerung eines vollautomatisierten Systems (S), das in Bezug auf ein Teil (Pi) beweglich ist, um auf dieses Teil (Pi) eine Beschichtung aufzubringen, wobei dieses vollautomatisierte System (S) einen vollautomatisierten Arm (1) umfasst, der zwischen einem ersten und einem zweiten Ende (1a, 1b) des Arms angelenkt ist, sowie einen Spritzkopf (T), der mit einer Spritzdüse (3) zum Aufspritzen des Beschichtungsmaterials und mit einer flexiblen Leitung (4), welche die Düse (3) mit aufzuspritzendem Beschichtungsmaterial versorgt, ausgerüstet ist, wobei dieser Spritzkopf (T) von dem ersten Ende (1a) des Arms (1) getragen wird und das zweite Ende (1b) des Arms mit einem Träger für das vollautomatisierte System (5) verbunden ist, der in Bezug auf das Teil (Pi) unbeweglich ist, wobei das Verfahren die Erzeugung einer Steuerung des Arms umfasst, derart:
- dass der Spritzkopf (T) von dem Arm (1) gemäß einer Bahn (C) bewegt wird, die sich ganz um eine Teilachse (B) herum erstreckt, die durch das Teil (Pi) hindurchgeht; und
- dass unabhängig von der Position des Kopfes (T) entlang dieser Bahn (C) die Düse (3) eine Spritzachse (T1) hat, die immer in Richtung des Teils (Pi) ausgerichtet ist, um dort das Material (6) aufzuspritzen; und **dadurch gekennzeichnet, dass** die Steuerung des Arms derart ist,
- dass auf einem ersten Abschnitt (C1) der Bahn (C) eine erste Seite (K1) des Kopfes in Richtung einer Teilebene (P) ausgerichtet ist, die durch eine Zone (Z) zum Halten des Teils (Pi) hindurchgeht, wobei diese Ebene (P) senkrecht zur Teilachse (B) ist; und
- dass auf einem zweiten Abschnitt (C2) der Bahn (C), der sich von dem ersten Abschnitt (C1) unterscheidet, eine zweite Seite (K2) des Kopfes (T), die in Bezug auf die erste Seite (K1) des Kopfes (T) entgegengesetzt ist, in Richtung der Ebene (P) des Teils (Pi) ausgerichtet ist.

2. Verfahren nach Anspruch 1, wobei, wenn sich der erste Bahnabschnitt (C1) in einem ersten Winkelsektor um die Teilachse (B) erstreckt und sich der zweite Bahnabschnitt (C2) in einem zweiten Winkelsektor um die Teilachse (B) erstreckt, wobei sich dieser erste und dieser zweite Winkelsektor voneinander unterscheiden, die Bahn des Kopfes um die Teilachse (B) umfasst:
- mehrere sich voneinander unterscheidende Abschnitte der Bahn, die ausschließlich in dem ersten Winkelsektor angeordnet sind; und
- mehrere sich voneinander unterscheidende weitere Abschnitte der Bahn, die ausschließlich in dem zweiten Winkelsektor angeordnet sind;
- für alle Abschnitte der Bahn (C), die sich in dem ersten Sektor (Alpha1) erstrecken, ist die erste Seite (K1) des Kopfes in Richtung der Teilebene (P) ausgerichtet; und
- für alle Abschnitte der Bahn (C), die sich in dem zweiten Sektor (Alpha2) erstrecken, ist die zweite Seite (K2) des Kopfes in Richtung der Teilebene (P) ausgerichtet; und
- bei jedem Übergang des Kopfes von einem in dem ersten Winkelsektor (Alpha1) befindlichen Bahnabschnitt in einen in dem zweiten Winkelsektor (Alpha2) befindlichen Bahnabschnitt wird der Kopf in einer ersten Drehrichtung (R1) in Bezug auf das erste Ende (1a) des Gelenkarms gedreht;
- bei jedem Übergang des Kopfes von einem in dem zweiten Winkelsektor (Alpha2) befindlichen Bahnabschnitt in einen in dem ersten Winkelsektor (Alpha1) befindlichen Bahnabschnitt wird dann der Kopf in einer zweiten Drehrichtung (R2) in Bezug auf das erste Ende (1a) des Gelenkarms gedreht, wobei diese zweite Drehrichtung des Kopfes entgegengesetzt zur ersten Drehrichtung ist.

3. Verfahren nach einem der Ansprüche 1 bis 2, wobei die Bahn der Bewegung des Spritzkopfes durch den Gelenkarm eine sich um die Teilachse (B) erstreckende Kreisbahn oder eine sich um die Teilachse (B) erstreckende Bahn in Form einer Spirale ist.

4. Verfahren nach einem der Ansprüche 1 bis 3, wobei sich die flexible Leitung längs des Gelenkarms erstreckt und an diesem letzten über Befestigungsmittel angebracht ist.

5. Verfahren nach mindestens einem der Ansprüche 1 bis 4, wobei die Steuerung des Gelenkarms derart ist, dass der Abstand, gemessen entlang der Spritzachse (T1) des Düsenkopfes, zwischen einem Auslass der Düse, durch den diese Spritzachse (T1) hindurchgeht, und dem Teil (Pi) entlang der gesamten Bewegungsbahn (C) des Spritzkopfes um die Achse (B) zwischen einem vorgegebenen minimalen Abstand und einem vorgegebenen maximalen Abstand liegt, wobei der maximale Abstand höchstens gleich 120% des vorgegebenen minimalen Abstands beträgt.

6. Verfahren nach mindestens einem der vorhergehenden Ansprüche, wobei das vollautomatisierte System (S) ferner einen aufzuspritzenden Materialvorrat (R) und Mittel zum Erzeugen eines Fluidflusses im Inneren der flexiblen Leitung (4) umfasst, um das Material des Vorrats (R) über diese Leitung in Richtung der Spritzdüse (3) des Spritzkopfes zu befördern, wobei das aufzuspritzende Material ein Pulver ist und der Fluidfluss vorzugsweise mindestens einen Treibstoff umfasst.

7. Verfahren nach mindestens einem der vorhergehenden Ansprüche, wobei der Gelenkarm einen ersten, zweiten, dritten, vierten und fünften Gelenkabschnitt (S1, S2, S3, S4, S5) umfasst:
- wobei der erste Abschnitt (S1) des Arms (1) mit dem Träger (5) des vollautomatisierten Systems (S) über eine erste Drehverbindung (A1) mit einer zur Teilachse (B) parallelen Drehachse verbunden ist;
- wobei der zweite Abschnitt (S2) des Arms (1) mit dem ersten Armabschnitt (S1) über eine zweite Drehverbindung (A2) mit einer zur Drehachse der ersten Drehverbindung (A1) senkrechten Drehachse verbunden ist;
- wobei der dritte Abschnitt (S3) des Arms (1) mit dem zweiten Abschnitt (S2) über eine dritte Drehverbindung (A3) mit einer zur Drehachse der zweiten Drehverbindung (A2) parallelen Drehachse verbunden ist;
- wobei der vierte Abschnitt (S4) des Arms (1) mit dem dritten Abschnitt (S3) über eine vierte Drehverbindung (A4) mit einer zur Drehachse der dritten Drehverbindung (A3) senkrechten Drehachse verbunden ist;
- wobei der fünfte Abschnitt (S5) des Arms (1) einerseits mit dem vierten Abschnitt (S4) über eine fünfte Drehverbindung (A5) mit einer zur Drehachse der vierten Drehverbindung (A4) senkrechten Drehachse verbunden ist und andererseits mit dem Spritzkopf (T) über eine sechste Drehverbindung (A6) mit einer zur Drehachse der fünften Drehverbindung (A5) senkrechten Drehachse verbunden ist, wobei jede der Drehverbindungen (A1, A2, A3, A4, A5, A6) in Abhängigkeit von der Steuerung des Arms (1) motorisiert bzw. in Bewegung gesetzt wird.

8. Vollautomatisiertes System, **dadurch gekennzeichnet, dass** es daran angepasst ist, das Verfahren zur Steuerung des Arms nach einem der Ansprüche 1 bis 7 durchzuführen.

## Claims

1. Method for controlling an automated system (S) movable relative to a component (Pi) for applying a coating to that component (Pi), this automated system (S) including a robot arm (1) articulated between the first and second ends (1a, 1b) of the arm and a spray head (T) having a nozzle (3) for spraying the coating material and a flexible pipe (4) feeding the nozzle (3) with coating material to be sprayed, this spray head (T) being carried by the first end (1a) of the arm (1) and the second end (1b) of the arm being connected to an automated system support (5) immobilized with respect to the component (Pi), the method including the generation of a control signal for the arm such that:
- the spray head (T) is moved by the arm (1) along a path (C) extending all around a component axis (B) passing through the component (Pi); and
- whatever the position of the head (T) along this path (C), the nozzle (3) has a spray axis (T1) always oriented in the direction of the component (Pi) to spray said material (6) thereon, and **characterised in that** the control signal for the arm is such that:
- in a first portion (C1) of the path (C), a first side (K1) of the head is oriented toward a component plane (P) passing through a zone (Z) for holding the component (Pi), this plane (P) being perpendicular to the component axis (B); and
- in a second portion (C2) of the path (C) distinct from the first portion (C1), a second side (K2) of the head (T) opposite the first side (K1) of the head (T) is oriented toward said plane (P) of the component (Pi).

2. Method according to claim 1, wherein when the first path portion (C1) lies in a first angular sector around the component axis (B) and the second path portion (C2) lies in a second angular sector around the component axis (B), these first and second angular sectors being distinct from one another, the path of the head around the component axis (B) including:
- several portions of the path distinct from one another exclusively arranged in the first angular sector; and
- several other portions of the path distinct from one another exclusively arranged in the second angular sector;
- for all portions of the path (C) lying in the first sector (α1) the head has its first side (K1) directed toward said component plane (P); and
- for all portions of the path (C) lying in the second sector (α2) the head has its second side (K2) oriented toward said component plane (P); and
- at each passage of the head from a path portion (C1) in the first angular sector (α1) to a path portion (C2) in the second angular sector (α2) the head is pivoted in a first rotation direction (R1) relative to the first end (1a) of the articulated arm;
- at each passage of the head from a path portion (C2) in the second angular sector (α2) to a path portion (C1) in the first angular sector (α1) the head is then pivoted in a second rotation direction (R2) relative to the first end (1a) of the articulated arm, this second direction of rotation of the head being opposite to said first rotation direction.

3. Method according to either one of claims 1 or 2, wherein the path of movement of the spray head by the articulated arm is a circular path extending around the component axis (B) or a spiral path extending around said component axis (B).

4. Method according to any one of claims 1 to 3, wherein the flexible pipe extends along the articulated arm and is attached to the latter by fixing means.

5. Method according to at least one of claims 1 to 4, wherein the articulated arm is controlled so that the distance measured along the spray axis of the nozzle head (T1) between an outlet of the nozzle through which this spray axis (T1) passes and the component (Pi) is included throughout the path (C) of movement of the spray head about the axis B between a predetermined minimum distance and a predetermined maximum distance, the maximum distance being at most equal to 120% of the predetermined minimum distance.

6. Method according to at least one of the preceding claims, wherein the automated system (S) further includes a store (R) of material to be sprayed and means for generating a fluid stream in the flexible pipe (4) to convey the material from the store (R) to the spray nozzle (3) of the spray head via said pipe, the material to be sprayed being a powder and the fluid stream preferably including at least one fuel.

7. Method according to at least one of the preceding claims, wherein the articulated arm includes first, second, third, fourth and fifth articulated portions (S1, S2, S3, S4, S5):
- the first portion (S1) of the arm (1) being connected to the support (5) of the automated system (S) via a first pivot connection (A1) to pivot about an axis parallel to said component axis (B);
- the second portion (S2) of the arm (1) being connected to the first portion (S1) of the arm via a second pivot connection (A2) to pivot about an axis perpendicular to the pivot axis of the first pivot connection (A1);
- the third portion (S3) of the arm (1) being connected to the second portion (S2) via a third pivot connection (A3) to pivot about an axis parallel to the pivot axis of the second pivot connection (A2);
- the fourth portion (S4) of the arm (1) being connected to the third portion (S3) via a fourth pivot connection (A4) to pivot about an axis perpendicular to the pivot axis of the third pivot connection (A3);
- the fifth portion (S5) of the arm (1) being connected on the one hand to the fourth portion (S4) via a fifth pivot connection (A5) to pivot about an axis perpendicular to the pivot axis of the fourth pivot connection (A4) and on the other hand to the spray head (T) via a sixth pivot connection (A6) to pivot about an axis perpendicular to the pivot axis of the fifth pivot connection (A5), each of said pivot connections (A1, A2, A3, A4, A5, A6) being driven and its movement being actuated by said control signal for the arm (1).

8. Automated system **characterized in that** it is adapted to implement the arm control method according to any one of claims 1 to 7.
